# EUROPÄISCHE PATENTANMELDUNG

(11) **EP 2 065 451 A2**
(43) Veröffentlichungstag der Anmeldung: **03.06.2009**
(21) Anmeldenummer: 09003823.3
(22) Anmeldetag: 19.09.2000
(51) Int. Cl.: C09D 17/00

(54) **Trockenpräparate**

(30) Priorität: 01.10.1999 DE 19947175
(62) Teilanmeldung aus: 00967706.3
(71) Anmelder: Merck Patent GmbH, 64293 Darmstadt (DE)
(72) Erfinder: Rathschlag, Thomas, 64560 Riedstadt (DE); Griessmann, Carsten, 64846 Gross-Zimmem (DE)

(57) **Zusammenfassung**

Die vorliegende Erfindung betrifft Trockenpräparate, die sich dadurch auszeichnen, daß sie > 70 Gew,% eines oder mehrerer Effektpigmente, ≤ 5 Gew. % Restfeuchte und ≥ 0,5 eines styrolmodifizierten Maleinatharzes mit einer Säurezahl > 90 mg/KOH enthalten, sowie deren Verwendung in Farben, Lacken, Druckfarben, Kunststoffen, Automobillacken und Pulverlacken.

## Beschreibung

Die Erfindung betrifft Trockenpräparate, wie z.B. Granulate oder Chips, die sich dadurch auszeichnen, daß sie > 70 Gew.% eines oder mehrerer Effektpigmente, ≤ 5 Gew. % Restfeuchte und ≥ 0,5 Gew.% eines styrolmodifizierten Maleinatharzes mit einer Säurezahl > 90 mg/KOH enthalten, sowie deren Verwendung in Farben, Lacken, Druckfarben, Kunststoffen, Automobillacken und Pulverlacken.

In technischen Prozessen werden Pigmente oft nicht als trockene Pulver eingesetzt, da diese stauben, was zu erhöhten Anforderungen in Hinblick auf die Arbeitsplatzsicherheit führt. Weiterhin wird bei der Einbringung von Pulvern in Kunststoffe, Druckfarben, Industrielacke, Basislacksysteme, etc., vielfach eine Agglomeration des Pigmentpulvers beobachtet. Eine homogene Verteilung des Pigments in der jeweiligen Matrix ist häufig nur schwer oder aber gar nicht zu erreichen.

Anstelle des Pigmentpulvers werden nicht staubende Pigmentzubereitungen oder Trockenpräparate verwendet. Hierbei handelt es sich um
- rieselfähige Pulver, wobei Perlglanzpigmente mit Polymeren beschichtete werden, wie sie z.B. in der DE-PS-2603211 beschrieben sind,
- pigmentierte rieselfähige Pulver mit einem geringen Feuchtegehalt, wie sie z.B. aus der DE-OS-4139993 bekannt sind,
- pigmentierte Pulver mit einem höheren Feuchtegehalt, wobei letztere häufig auch aufgrund ihrer fließfähigen Konsistenz als Pasten bezeichnet werden,
- Pigmentzubereitungen in Granulatform, bei denen organische Pigmente mit einem Harzgemisch belegt sind, wie z.B. in der EP 0 897 956 A2 offenbart, oder um
- Trockenpräparationen, wie z.B. Pellets, Granulate als Vorprodukte für Druckfarben, wie sie z.B. aus der EP 0 803 552 bekannt sind.

Nichtstaubende, homogene Pigmentpräparationen und daraus hergestellte Trockenpräparate sind eine technische Alternative zu den trockenen oder angefeuchteten Pulvern, wenn sie folgende Rahmenbedingungen erfüllen:
- fließfähige Konsistenz
- möglichst geringe Dilatanz
- möglichst hoher Pigmentgehalt

Die Komponenten der Präparation/Paste, bzw. der Trockenpräparate sollten dabei so gewählt sein, daß die Zubereitung möglichst gut auf die anderen Komponenten des jeweiligen Beschichtungssystems abgestimmt ist und sich nach der Einbringung leicht homogen verteilt.

Neben einer guten Kompatibilität mit den weiteren Bestandteilen des Beschichtungssystems müssen Pigmentpräparationen, bzw. die daraus hergestellten Trockenpräparate dazu führen, daß die Beschichtungssysteme eine hohe Stabilität aufweisen, d.h., sie dürfen nicht zur Phasenseparation neigen, bzw., wo dieses auf Grund der niedrigen Viskosität nicht vollständig zu verhindern ist, müssen die Beschichtungssysteme leicht wieder in einen homogenen Zustand versetzt werden können, d.h., das abgesetzte Sediment muß leicht wiederaufrührbar sein. Diese Forderung ist insbesondere wichtig bei plättchenförmigen Pigmenten, da diese auf Grund ihrer Struktur bei der Phasenseparation zum "Zusammenbacken" neigen und nur schwer wieder aufgerührt werden können. Pigmente auf der Basis plättchenförmiger Substrate sind insofern problematisch in der Handhabung, als die Pigmente infolge ihrer Größe und ihrer Dichte sich leicht absetzen und dann zu einem sehr festen Sedimentkuchen zusammenbacken können. Dieser Kuchen ist in der Regel nur schwer wiederaufrührbar. Dies gilt vor allem bei der Lagerung von Lacken, Farben und Druckfarben, aber auch bei der Verarbeitung derselben.

So wurden unter anderem zahlreiche Methoden entwickelt um das Problem der Einarbeitung und Handhabung von plättchenförmigen Pigmenten in Beschichtungsmassen zu lösen. Das Wiederaufrühren kann erleichtert werden, indem den Beschichtungsmassen Additive zugesetzt werden, die entweder eine gezielte Flokkulation (Kartenhauseffekt), ein strukturviskoses und/oder thixotropes Verhalten, eine sterische Abstoßung und/oder eine elektrostatische Abstoßung der Pigmente bewirken. Diese Zusätze können jedoch einen negativen Einfluß auf die Qualität der Beschichtung haben. Insbesondere die Brillanz bei Effektpigmenten und die Gleichmäßigkeit der Beschichtung können beeinträchtigt werden.

Weiterhin ist eine homogene, stabile Verteilung der Redispergiermittel im Perlglanzpigment-Pulver nur schwer zu erreichen bzw. das Redispergiermittel verliert beim Mischen an Aktivität.

Die bisher zur Verwendung in Beschichtungssystemen entwickelten Zubereitungen mit Effektpigmenten mit einem Pigmentanteil > 30 Gew.% genügen den beschriebenen Anforderungen häufig nur unzureichend, insbesondere deshalb, da sie zur Agglomeration und Scherverdickung neigen.

Die Aufgabe der vorliegenden Erfindung bestand daher in der Bereitstellung von Pigmentpräparationen, insbesondere in Form von Zubereitungen bzw. Pasten und Trockenpräparaten; die gleichzeitig sehr gut in wäßrigen, lösemittelhaltigen und lösemittelfreien Druckfarben- und Beschichtungssystemen verwendet werden können, eine hohe Stabilität aufweisen, sich leicht redispergieren lassen und sich gleichzeitig durch eine hohe Kompatibilität mit den übrigen Komponenten des Beschichtungssystems auszeichnen. Weiterhin soll die erfindungsgemäße Pigmentpräparation auch zur Herstellung von Trockenpräparaten, z.B. in Form von Pellets, Granulaten, etc., gut geeignet sein.

Überraschenderweise wurde gefunden, daß diese Aufgabe durch die Bereitstellung der erfindungsgemäßen Pigmentpräparation gelöst werden kann. Styrolmodifizierte Maleinatharze zeigen in Kombination mit Effektpigmenten, wie z.B. Perlglanzpigmenten eine universelle Verträglichkeit in wäßrigen, lösemittelhaltigen und lösemittelfreien Druckfarben- und Beschichtungssystemen. Weiterhin wird die Ausbildung des Interferenzeffekts bei Perlglanzpigmenten positiv beeinflußt.

Gegenstand der Erfindung sind somit eine Trockenpräparate, die

| | |
|---|---|
| > 70 Gew.% | eines oder mehrerer Effektpigmente, |
| ≥ 0,5 Gew.% | eines styrolmodifizierten Maleinatharzes mit einer Säurezahl > 90 mg/KOH, |
| ≤ 5 Gew.% | Restfeuchte in Form von Wasser und/oder eines organischen Lösemittels oder Lösemittelgemisches, |
| 0 - 10 Gew.% | Neutralisationsmittel und |
| 0 - 10 Gew.% | Modifiziermittels |

enthalten.

Die erfindungsgemäße Präparation ist in Abhängigkeit vom Feuchtegehalt eine fließfähige Paste bzw. ein angefeuchtetes, rieselfähiges Pulver. Beide sind sehr gut zur Herstellung von Trockenpräparaten, z.B. Granulaten, Pellets, Briketts, geeignet. Speziell bei der Herstellung nichtstaubender Pigmentgranulate kann durch die Verwendung von styrolmodifizierten Maleinnatharzen eine bessere Compoundierung als mit den aus dem Stand der Technik bekannten Polymerharzen, wie sie z.B aus der EP 0 803 558 A1 bekannt, erzielt werden. Die aus der erfindungsgemäßen Pigmentzubereitung hergestellten Trockenpräparate sind ebenfalls Gegenstand der Erfindung.

Weiterhin sind die erfindungsgemäßen Produkte nicht staubend, gut rieselfähig, lassen sich schnell in kommerziell erhältliche Bindemittelsysteme einarbeiten und sind dort kompatibel. Insbesondere sind die Produkte sowohl kompatibel mit wäßrigen, lösemittelhaltigen als auch lösemittelfreien Druckfarben- und Lacksystemen. Die über das Trockenpräparat, z.B. Granulat oder Chips, hergestellten Farben und Lacke sind geeignet für den Tiefdruck, Flexodruck, Siebdruck, Offsetüberdrucklack, Überdrucklack (OPV = Overprint Varnish), sowie die verschiedenen Lacksysteme aus dem Industrielack und Automobilsektor. Auch für Kunststoffeinfärbungen kommen sie in Betracht.

Die erfindungsgemäße Pigmentpräparation enthält vorzugsweise 40 - 98 Gew.% an Effektpigmenten, insbesondere 45 - 95 Gew.%, bezogen auf die Präparation. Ganz besonders bevorzugt sind Pigmentpräparationen mit einem Gehalt an Effektpigmenten von mehr als 50 Gew.%. Die Gew.%-Angaben beziehen sich immer auf die feuchte, d.h. nicht getrocknete, Pigmentpräparation.

Als Effektpigmente werden Pigmente auf der Basis plättchenförmiger, transparenter oder semitransparenter Substrate aus z.B. Schichtsilikaten, wie etwa Glimmer, synthetischen Glimmer, Talkum, Sericit, Kaolin oder anderen silikatischen Materialien, plättchenförmiges Eisenoxid, SiO₂-Plättchen, TiO₂-Plättchen, Graphit-Plättchen, Fe₂O₃-Plättchen, Al₂O₃-Plättchen, Glas-Plättchen, holographischen Pigmenten verwendet, die mit seltenen Erdmetallsulfiden, wie z. B. Ce₂S₃, farbigen oder farblosen Metalloxiden z. B. TiO₂ Titansuboxide, Titanoxinitride, Fe₂O₃, Fe₃O₄, SnO₂, Cr₂O₃, ZnO, CuO, NiO, und anderen Metalloxiden allein oder in Mischung in einer einheitlichen Schicht oder in aufeinanderfolgenden Schichten (Multilayerpigmente) belegt sind. Die sogenannten Multilayer-oder Mehrschichtpigmente sind z. B. bekannt aus den deutschen Offenlegungsschriften DE 197 46 067, DE 197 07 805, DE 197 07 806 und DE 196 38 708. Perlglanzpigmente auf Basis von Glimmerplättchen sind z.B. aus den deutschen Patenten und Patentanmeldungen 14 67 468, 19 59 998, 20 09 566, 22 14 454, 22 15 191, 22 44 298, 23 13 331, 25 22 572, 31 37 808, 31 37 809, 31 51 343, 31 51 354, 31 51 355, 32 11 602, 32 35 017 und P 38 42 330 bekannt und im Handel erhältlich, z.B. unter den Marken Minatec^{®} und Iriodin® der Fa. Merck KGaA, Darmstadt, BRD.

Besonders bevorzugte Pigmentpräparationen enthalten TiO₂/Glimmer-, Fe₂O₃/ Glimmer- und/oder TiO₂/Fe₂O₃-Glimmerpigmente. Die Beschichtung der SiO₂-Plättchen kann z. B. erfolgen wie in der WO 93/08237 (naß-chemische Beschichtung) oder DE-OS 196 14 637 (CVD-Verfahren) beschrieben. Al₂O₃-Plättchen sind beispielsweise aus der EP 0 763 573 bekannt. Plättchenförmige Substrate, die mit ein oder mehreren seltenen Erdmetallsulfiden belegt sind, werden z. B. in der DE 198 10 317 offenbart.

Weiterhin geeignet sind Metalleffektpigmente, insbesondere für wäßrige Systeme modifizierte Aluminiumplättchen, wie sie von der Fa. Eckart unter der Marke Rotovario Aqua^{®} oder Stapa Hydroxal für wäßrige Anwendungen vertrieben werden, sowie Variocrom^{®} und Paliocrom^{®}-Pigmente der Fa. BASF insbesondere auch solche aus den Offenlegungsschriften EP 0 681 009, EP 0 632 110, EP 0 634 458, sowie LCP-Pigmente (Liquid Crystal Polymers). Weiterhin geeignet sind ebenfalls alle dem Fachmann bekannten plättchenförmigen Pigmente, die Metallschichten aufweisen. Derartige Pigmente werden von der Fa. Flex, Fa. BASF, der Fa. Eckart und der Fa. Schlenk vertrieben.

Die erfindungsgemäßen Pigmentpräparationen können ein oder mehrere Effektpigmente enthalten. Vielfach können durch die Verwendung von mindestens zwei verschiedenen Effektpigmenten besondere Farb- und Glanzeffekte erzielt werden. Bevorzugte Pigmentpräparationen enthalten ein oder mehrere Effektpigmente auf Basis von Glimmer und/oder SiO₂ Flakes. Weiterhin sind Abmischungen mit organischen und anorganischen Pigmenten bis zu 10 Gew.% bezogen auf die Pigmentpräparation möglich.

Insbesondere führt die Zugabe von ein oder mehreren Farbstoffen und/ oder organischen Pigmenten, wie z.B. Mikrolith (Fa. Ciba) oder Hydrocolor-/Solcolorpräparationen der Fa. MK Chemical, in angeriebener Form zu speziellen Farbeffekten. Weiterhin können solche Substanzen und Partikel (tracer) zugesetzt werden, die eine Produktidentifizierung ermöglichen (Produktschutz).

Als zwingende Komponente enthält die erfindungsgemäße Pigmentpräparation ein styrolmodifiziertes Maleinatharz mit einer Säurezahl > 90 mg/ KOH in Mengen von 0,5 bis 59,5 Gew.%, vorzugsweise 5 bis 40 Gew.%, insbesondere 10 bis 30 Gew.%. Besonders bevorzugt sind styrolmodifizierte Maleinatharze, die eine Säurezahl von > 100, insbesondere von > 150, aufweisen.

Die verwendeten styrolmodifizierten Maleinatharze haben ein mittleres Molekulargewicht von 500 bis 200000, vorzugsweise von 1000 bis 100000, insbesondere von 1000 bis 50000. Ganz besonders bevorzugt sind styrolmodifizierte Maleinatharze mit einem Molekulargewicht von 2500-3500. Bei ansonsten gleichen Eigenschaften sind die Polymere mit einem niedrigen Molekulargewicht bevorzugt, da diese in der Regel eine geringere verdickende Wirkung in den Beschichtungssystemen zeigen.

Die styrolmodifizierten Maleinatharze werden hergestellt durch radikalische Polymerisation, insbesondere Co- bzw. Terpolymerisation, wobei gesättigte und ungesättigte Alkohole sowie weitere Funktionalisierungen in breiten Massenverhältnissen eingebaut werden können. Insbesondere können auch Polyethylen- und Polypropyleneinheiten bzw. Mischungen von Alkylenoxiden in das Polymergrundgerüst eingebaut sein, sowie Alkylenoxidester, -amine, -ether und freie Carboxylgruppen. Dieser Einbau ist insbesondere von großem Vorteil für die Kompatibilität der erfindungsgemäßen Produkte in wäßrigen Systemen. Die styrolmodifizierten Maleinatharze haben vorzugsweise ein Styrol-Maleinsäureanhydrid-Verhältnis von 1:1 bis 4:1. Die so hergestellten styrolmodifizierten Maleinatharze zeichnen sich durch ihre Beständigkeit gegen Licht (Vergilbungsfestigkeit), gegen Sauerstoff (Lagerstabilität), gegen Selbstentzündung sowie durch geringe statische Aufladung aus.

Insbesondere geeignet sind a-Methylstyrol-modifizierte Maleinatharze. Vorzugsweise werden erfindungsgemäß solche Harze eingesetzt, die eine Glasübergangstemperatur oberhalb der Raumtemperatur aufweisen. Damit ist ein Verblocken und mangelnde Rieselfähigkeit des Trockenpräparates ausgeschlossen. So besitzen die verwendeten Maleinatharze eine Glasübergangstemperatur vorzugsweise von 35 - 170 °C, insbesondere von 40 - 80 °C. Die Erweichungstemperatur der verwendeten Harze liegt vorzugsweise bei 45 - 180 °C, insbesondere bei 50 - 90 °C.

Die styrolmodifizierten Harze sind auch im Handel erhältlich, z. B. unter den Markennamen SMA^{®} der Fa. Elf-Atochem.

Vorteilhaft ist weiterhin, wenn die erfindungsgemäße Pigmentpräparation 0 bis 10 Gew.%, vorzugsweise 0,05 bis 5 Gew.%, insbesondere 0,01 bis 3 Gew.% eines Modifizierungsmittels enthält. Insbesondere wird als Modifiziermittel ein Polyalkylenoxid bzw. deren Derivate eingesetzt, um die Festigkeit, die Kompatibilität und die Auflösegeschwindigkeit der Trockenpräparate zu erhöhen. Ferner sind als Modifiziermittel die Wiederaufrührbarkeit verbessernde Harze wie Kolophoniumharze, Urethanharze, Nitrocellulose und alle bekannten Cellulosederivate, Polyester, PVC, Sulfopolyester, Polyethylenglykolester und -ether, Emulgatoren, Tenside in Mengen von 0,1 bis 10 Gew.%, vorzugsweise 0,05 bis 5 Gew.%, insbesondere 0,01 bis 3 Gew.%, bezogen auf die Präparation geeignet.

Insbesondere können auch solche Stoffe der erfindungsgemäßen Pigmentpräparation zugesetzt werden, die das Zerfallen und Lösen der Pigmentgranulate beschleunigen bzw. unterstützen, z.B. sperrige sphärische Partikel, wie Hohlkugeln, Halbkugeln, quellfähige Stoffe mit starkem Quellvermögen, Stoffe die sich unter Gasentwicklung kontrolliert zersetzen, bzw. solche mit sehr hoher Löslichkeit.

Die erfindungsgemäße Pigmentpräparation oder daraus hergestellte Trockenpräparate enthalten vorzugsweise als weitere Komponente ein oder mehrere Neutralisationsmittel. Geeignet sind insbesondere die auf dem Lacksektor üblichen Basen, wie z.B. Harnstoff, Harnstoffderivate, Ammoniak, Aminoalkohole, Alkalihydroxide, wie z.B. KOH oder NaOH, Amine, wobei es sich bevorzugt bei Präparationen für wäßrige Anwendungen um nichtflüchtige organische niedermolekulare Amine handelt, bzw. um solche, die bei 100 °C nur eine geringe Flüchtigkeit besitzen.

Die Säurezahl des modifizierten Maleinatharzes in Verbindung mit dem Neutralisationsmittel führt dazu, daß die Harze Wasserlöslichkeit erlangen. Die Wasserlöslichkeit ist gemäß der vorliegenden Erfindung zum Einen wichtig beim Herstellprozeß, um einen wäßrigen Weg beschreiten zu können, zum Anderen ist die Wasserlöslichkeit Voraussetzung für den Einsatz in wäßrigen und wasserhaltigen Druckfarbensystemen (Kompatibilität).

In der Regel enthält die erfindungsgemäße Pigmentpräparation 0 bis 10 Gew.% eines Neutralisationsmittels, vorzugsweise 1 bis 7 Gew.%, insbesondere 1 bis 5 Gew.%, bezogen auf die Pigmentpräparation.

Falls erforderlich wird durch den Zusatz eines Redispergierhilfsmittels in Form von sperrigen Teilchen, wie z.B. Fasern oder sphärischen Partikeln, verhindert, daß die nach dem erfindungsgemäßen Verfahren behandelten Effektpigmente sich auf Grund der sterischen Abstoßung in nennenswertem Umfang aufeinanderlegen und damit eine starke Adhäsion ausüben. Dies bewirkt, daß
1. die erfindungsgemäßen Präparationen stabiler sind, und
2. durch den Eintrag der Redispergierhilfe über die Pigmentpräparation in das Lack- oder Farbsystem die Effektpigmente sich in Lack- und Farbsystemen zum Teil sehr viel langsamer absetzen,
das Sediment aber in allen Fällen weniger hart ist, und daß keine Probleme beim Wiederaufrühren des Bodensatzes auftreten.

Das Redispergiermittel wird vorzugsweise in Mengen von 0 bis 5 Gew.%, insbesondere von 0,05 bis 3 Gew.%, bezogen auf die Pigmentpräparation eingesetzt. Alle dem Fachmann bekannten organischen und anorganischen Fasern mit einer Faserlänge von 0,1-20 µm können verwendet werden. Geeignete Partikel sind insbesondere alle Kunstfasern, z.B. aus Polyethylen, Polyacrylaten, Polypropylen, Polyamiden, Cellulosefasern, anorganische Fasern, hier bevorzugt Siliziumverbindungen, Glasfasern sowie insbesondere die Kondensationsprodukte aus modifizierten Isocyanaten und Mono- und Diaminen. Diese Kondensationsprodukte, wobei es sich um Diharnstoffderivate sowie Aminoharnstoffe mit Urethangruppierungen handelt, sind als Thixotropierungsmittel bekannt und werden mit einem Bindemittel Farben und Lacken zugesetzt, um die Ablaufeigenschaften und die Streichbarkeit zu verbessern.

Als Redispergierhilfsmittel können alle dem Fachmann bekannten Diharnstoffderivate und Urethanverbindungen verwendet werden, wie sie z.B. in der EP 0 198 519, der DE 18 05 693.4 und in Organic Coatings: Science and Technology, A. Heenriga, P.J.G. von Hemsbergen, S. 201-222, New York 1983 beschrieben werden.

Geeignete sphärische Materialien sind insbesondere Glas-, Wachs- oder Polymerhohlkugeln aus Vinylharzen, Nylon, Silicon, Epoxyharzen, Olefinharzen, Polystyrolen sowie anorganische Materialien, wie z.B. TiO₂, SiO₂ oder ZrO₂. Vorzugsweise werden Hohlkugeln, ferner auch Vollkugeln, mit einer Teilchengröße von 0,05 bis 150 µm verwendet. Insbesondere bevorzugt werden in der erfindungsgemäßen Pigmentpräparation Glas-, Wachsoder Polymerhohlkugeln eingesetzt.

Sphärische Teilchen auf Basis von SiO₂ in einem Teilchenbereich von 3-10 µm sind z.B. als Materialien für die Hochdruckflüssigkeitschromatographie bekannt und werden z.B. als LiChrospher^{®} von der Fa. Merck KGaA, Darmstadt, BRD, vertrieben. Vorzugsweise werden solche Materialien in monodisperser Form, d.h. mit einer möglichst einheitlichen Teilchengröße, eingesetzt. Bekannt sind solche monodispersen sphärischen Teilchen auf Basis von SiO₂, TiO₂ und ZrO₂. Monodisperses SiO₂ kann beispielsweise nach der DE 36 16 133 hergestellt werden. Glashohlkugeln werden beispielsweise unter dem Handelsnamen Q-CEL von der Fa. PQ Corporation, USA oder Scotchlite von der Fa. 3M, Frankfurt, BRD vertrieben.

Zusätzlich kann die erfindungsgemäße Pigmentpräparation oberflächenaktive Substanzen enthalten, wie z.B. Alkylsilane, die auch eine weitere funktionelle Gruppe enthalten können, ungesättigte oder gesättigte Fettsäuren oder Fluortenside. Insbesondere bevorzugt werden Silanverbindungen der Formel (CₙH₂ₙ₊₁)Si(OCₘH₂ₘ₊₁)₃, worin n 1-30 und m 1-10 bedeutet, als oberflächenaktive Substanzen eingesetzt. Geeignete Silanverbindungen sind beispielsweise n-Hexyldecyltriethoxysilan und n-Octyldecyltriethoxysilan (Si 116 bzw. Si 118 der Degussa AG, Frankfurt, BRD) sowie die entsprechenden Fluoralkylsilane.

Vorzugsweise enthält die Pigmentpräparation neben dem Silan noch zusätzlich ein Tensid oder eine Fettsäure. Bei dem oberflächenaktiven Reagenz kann es sich auch um ein Gemisch aus Silan, Fettsäuren und/oder Tensiden handeln. Die Pigmentpräparationen können 0,1 bis 5 Gew.%, vorzugsweise 0,2 bis 3 Gew.% und insbesondere 0,5 bis 2 Gew.%, an oberflächenaktiven Substanzen bezogen auf die Präparation enthalten.

Ferner können als oberflächenaktive Substanzen die gesättigten und ungesättigten Fettsäuren, wie z.B. Capronsäure, Caprylsäure, Caprinsäure, Laurinsäure, Myristinsäure, Palmitinsäure, Stearinsäure, Ölsäure, Linolsäure sowie Fettsäuregemische eingesetzt werden.

Die erfindungsgemäße Pigmentpräparation enthält 0,5 bis 50 Gew.% Wasser und/oder eines organischen Lösemittels bzw. Lösemittelgemisches, vorzugsweise 1 bis 45 Gew.%, insbesondere 1 bis 40 Gew.%, bezogen auf die Präparation.

Die Lösemittelkomponente in der erfindungsgemäßen Pigmentpräparation muß auf das Harz mit einer Säurezahl > 90 mg/KOH sachgemäß abgestimmt werden. Bei der Herstellung können Wasser sowie alle organischen Lösemittel eingesetzt werden in Abhängigkeit vom eingesetzten Polyacrylatharz. Geeignete Lösemittel sind z. B. aromatische Lösungsmittel wie Toluole, Benzine, Xylole, Kohlenwasserstoffe sowie Ester, Cyclohexan, Furane, Dioxane, Chlorkohlenwasserstoffe, langkettige Amine, pflanzliche Öle, einwertige aliphatische Alkohole, wie solche mit 2 bis 4 Kohlenstoffatomen, z.B. Ethanol, Butanol oder Isopropanol oder Ketone, z.B. Aceton oder Methylethylketon oder Glykolether, wie z.B. Propylenglycolmonomethylether, Propylenglycolmonoethylether oder Diole, wie z.B. Ethylenglykol und Propylenglykol oder Polyetherdiole, aliphatische Triole und Tetrole mit 2 bis 6 Kohlenstoffatomen, wie Trimethylolethan, Trimethylolpropan, Glycerin, 1,2,4-Butantriol, 1,2,6-Hexantriol und Pentaerythrit, sowie alle anderen Lösemittel anderer Verbindungsklassen bzw. der Gemische der vorgenannten Lösemittel. Vorzugsweise werden solche Lösemittel eingesetzt, die in Karsten, Lackrohstofftabellen, 9. Auflage 1992, aufgelistet sind.

Die Herstellung der erfindungsgemäßen Pigmentpräparation erfolgt einfach dadurch, daß zu dem Effektpigment bzw. Effektpigmentgemisch, das modifizierte Maleinatharz, gegebenenfalls Wasser und/oder ein organisches Lösemittel oder Lösemittelgemisch, ein Modifiziermittel und gegebenenfalls weitere Additive, gleichzeitig oder nacheinander hinzugegeben werden, und daß diese Mischung in einem Mischgerät schonend homogenisiert wird.

Vorzugsweise wird das Pigment vorgelegt und zunächst unter Rühren mit dem Wasser bzw. dem organischen Lösemittel oder Lösemittelgemisch enthaltend das Maleinatharz und gegebenenfalls bereits das Modifiziermittel, angeteigt; anschließend erfolgt gegebenenfalls die Zugabe einer weiteren Lösung bestehend aus Wasser bzw. Lösemittel und Additiven.

Der erfindungsgemäßen Pigmentpräparation können während oder nach der Herstellung weitere übliche Additive zugesetzt werden, wie z.B. Entschäumer, Netzmittel, Antiabsetzmittel, Verlaufsmittel, Sikkative oder Thixotropiermittel. Es handelt sich hierbei um in der Lackindustrie übliche Hilfsstoffe, die in der erfindungsgemäßen Pigmentpräparation in einer Menge von 0 bis 10 Gew.% enthalten sein können. Insbesondere sind hier genannt Succinatderivate, z.B. solche wie sie von der Fa. Henkel unter der Marke Hydropalat 875 vertrieben werden.

Bei der erhaltenen erfindungsgemäßen feuchten Pigmentpräparation handelt es sich um ein homogenes Pulver bzw. um gut fließfähige Pasten mit einem relativ hohen Gehalt an Effektpigmenten. Aufgrund der besonders hohen Kompatibilität des styrolmodifizierten Maleinatharzes ist die erfindungsgemäße Pigmentpräparation ebenfalls gut kompatibel mit handelsüblichen wäßrigen, lösemittelhaltigen und lösemittelfreien Druckfarbensystemen. Weiterhin zeichnet sich die Präparation durch ihre Staubfreiheit, die gute Dispergierbarkeit und Redispergierbarkeit aus und ist somit herkömmlichen Pigmentpräparationen deutlich überlegen.

Zur Herstellung von Trockenpräparaten wird die erfindungsgemäße Pigmentpräparation stranggepreßt oder auf anderen dem Fachmann bekannten Wegen in eine kompakte Teilchenform verdichtet, z. B. durch Tablettieren, Brikettieren, Pelletieren, Granulieren, Sprühgranulieren, Wirbelbettgranulieren oder Extrudieren, und gegebenenfalls anschließend getrocknet. Der Trocknungsprozeß findet in der Regel bei Temperaturen von 20 °C bis 150 °C statt, vorzugsweise bei 60 bis 120 °C, und kann ggf. unter reduziertem Druck erfolgen. Die Trockenpräparate, wie z.B. Chips, Pellets, Briketts oder Granulate, weisen eine Restfeuchte von max. 5 Gew.%, vorzugsweise < 3 Gew.%, auf. Die Granulate weisen Pigmentgehalte von > 70 Gew.%, vorzugsweise von > 80 Gew.%, bezogen auf das Granulat auf. Zuletzt wird das Trockenpräparat gegebenenfalls klassiert. Die so erhaltenen getrockneten Granulate haben gegenüber den wasser- bzw. lösemittelhaltigen Präparationen nochmals gesteigerte positive Eigenschaften: Die fehlenden flüssigen Komponenten erhöhen die Kompatibilität. Speziell trockene Granulate zeigten überraschenderweise auch keine Nachteile in der Benetzung. Im Gegenteil, bei Zugabe zu einem wäßrigen Bindemittel oder einem Bindemittel auf Basis polarer Lösemittel (Ethanol, Ethylacetat, MEK, etc.) erfolgt schneller Zerfall des Granulats und eine sofortige vollständige Benetzung. Weitere Vorteile einer trockenen Zubereitung sind die verbesserte Lagerstabilität, der erleichterte Transport und die verbesserte Produktionssicherheit beim Kunden. Granulate, beispielsweise in Kugelform, sind sehr gut fließfähig und leicht zu dosieren und haben bei allen diesen Eigenschaften eine vollständige Freiheit von Staub. Das Volumen dieser Granulate ist reduziert auf ca. 1/3 des Volumens von Perlglanzpigmentpulvern. Die Teilchengrößen der Trockenpräparate liegen im Bereich von 0,1 bis 150 mm, vorzugsweise 0,1 - 20 mm, insbesondere 0,1 - 2 mm.

Neben der guten Verträglichkeit mit den Beschichtungssystemen sowie den Synergieeffekten mit den übrigen Komponenten in der Pigmentpräparation bzw. im Trockenpräparat ist mit der hohen Säurezahl des styrolmodifizierten Maleinatharzes die Möglichkeit gegeben, die Harze zusammen mit Neutralisationsmitteln in eine wasserlösliche Form zu überführen. Die Herstellung der Trockenpräparate wie z.B. Granulate, Chips, Pellets oder Briketts kann somit über einen wäßrigen Weg vollzogen werden, was erheblich höhere Produktionssicherheit gegenüber der Verwendung von Lösemitteln mit sich bringt.

Durch die Integration einer Redispergierhilfe ist gewährleistet, daß die erfindungsgemäßen Pigmentpräparationen auch in den fertigen Lack- und Farbsystemen leicht aufrührbar sind und keiner weiteren Verbesserung durch den Endformulierer mehr bedürfen.

Die verbesserte Deagglomeration der Trockenpräparate eingearbeitet in ein Bindemittel, z.B. in eine Druckfarbe, zeigt sich bereits mit geringen Mengen an sphärischen Teilchen in der Pigmentpräparation. So werden bereits bei der Verwendung von Granulaten mit einem Gehalt von 0,5 Gew.% an sphärischen Teilchen bezogen auf das Trockenpräparat die Auflösegeschwindigkeit deutlich erhöht und die Stabilität der Druckfarbe schneller erzielt (Viskosität/Farbton).

Die Trockenpräparate sind nicht staubend, gut rieselfähig und lassen sich schnell in kommerziell erhältliche Bindemittelsysteme einarbeiten und sind dort kompatibel. Insbesondere sind die Produkte kompatibel sowohl mit wäßrigen, lösemittelhaltigen als auch lösemittelfreien Druckfarben und Lacksystemen.

Die erfindungsgemäße Präparation als Paste oder als Trockenpräparat kann für vielfältige Anwendungen verwendet werden. Bevorzugt wird sie in Beschichtungssystemen aus den Bereichen Druck, insbesondere Überdrucklackierung, Offsetüberdrucklackierung, und Tiefdruck, Flexodruck und Siebdruck, eingesetzt. Besonders bevorzugt wird die Präparation bzw. das daraus hergestellte Trockenpräparat als Vorprodukt für Beschichtungsmassen auf beliebige Substratmaterialien, beispielsweise Metalle wie Eisen, Stahl, Aluminium, Kupfer, Bronze, Kunststoff, Messing sowie Metallfolien aber auch Glas, Keramik und Beton, als auch auf Holz, z.B. Möbel, Ton, Textil, Papier, Verpackungsmaterialien, z.B. Kunststoffbehälter, Folien oder Pappen, oder auf anderen Materialien zu dekorativen und/oder schützenden Zwecken aufgebracht.

Gegenstand der Erfindung ist somit auch die Verwendung der Pigmentpräparation in Formulierungen wie Farben, Lacken, Druckfarben und Kunststoffen, sowie Automobillacken, Pulverlacken und Beschichtungsmassen allgemeiner Art.

Die nachfolgenden Beispiele sollen die Erfindung näher erläutern, ohne sie jedoch zu beschränken.

### Beispiele

### Beispiel 1

67 g SMA^{®}-1440 F (styrolmodifizierte Maleinatharze der Fa. Elf-Atochem) werden in 590 g VE-Wasser und 18 g 25 %iger Ammoniaklösung gelöst. Nach Zugabe von 16 g Polyethylenglykol 2000 (Fa. Merck KGaA) erfolgt die anschließende Homogenisierung bis eine klare Lösung entsteht.

Anschließend erfolgt der Eintrag in 1000 g Iriodin^{®} 103 (TiO₂/Glimmerpigment mit einer Teilchengröße von 10 - 50 µm der Fa. Merck KGaA). Die so hergestellte Präparation wird auf einem Granulierteller TR 01 der Fa. Eirich granuliert. Die Trocknung erfolgt bei 60-120 °C über 48 Stunden. Grobkornabtrennung erfolgt über ein Sieb mit der Maschenweite von 2 mm. Der Feinanteil wird über ein Sieb mit der Maschenweite von 0,4 mm abgetrennt.

Die so hergestellten Granulate sind abriebfest und verträglich mit dem gängigen lösemittelhaltigen Haptobond F 105-Verschnitt H 75659/691 sowie mit dem lösemittelhaltigen Rotationsverschnitt 50.36 der Fa. SICPA.

### Beispiel 2

67 g SMA^{®}-1440 F (styrolmodifizierte Maleinatharze der Fa. Elf-Atochem) werden in 479 g VE-Wasser und 29 g 2-Amino-2-Methyl-1-Propanol (75%ig in Wasser) gelöst. Nach der Auflösung des Harzanteils erfolgt die Zudosierung von 16 g Polyethylenglykol 2000 und die anschließende Homogenisierung bis eine klare Lösung entsteht.

Anschließend erfolgt der Eintrag in 1000 g Paliochrom^{®} Gold L 2002 (Effektpigment der Fa. BASF). Die so hergestellte Präparation wird auf einem Granulierteller TR 01 der Fa. Eirich granuliert. Die Trocknung erfolgt 72 Stunden bei 60-120 °C. Grobkornabtrennung erfolgt über ein Sieb mit der obersten Maschenweite von 2 mm. Der Feinanteil wird über ein Sieb mit der Maschenweite von 0,4 mm abgetrennt. Die so hergestellten Granulate sind abriebfest und gut verträglich mit dem gängigen wäßrigen Offset-Überdrucklack 350081 der Weilburger Lackfabrik.

### Beispiel 3

67 g SMA^{®}-1440 F der Fa. Elf-Atochem werden in 590 g VE-Wasser und 29 g 2-Amino-2-Methyl-1-Propanol (75%ig in Wasser) gelöst. Nach der Auflösung des Harz-anteils erfolgt die Zudosierung von 16 g Hydropalat 875 (Na-Salz der Sulfobernsteinsäure der Fa. Henkel) und die anschließende Homogeni-sierung bis eine klare Lösung entsteht.

Anschließend erfolgt der Eintrag in 1000 g Iriodin^{®} 103 (Perlglanzpigment der Fa. Merck KGaA). Die so hergestellte Präparation wird auf einem Granulierteller TR 01 der Fa. Eirich, granuliert. Die Trocknung erfolgt bei 60-120 °C über 48 Stunden. Grobkornabtrennung erfolgt über ein Sieb mit der obersten Maschenweite von 2 mm. Der Feinanteil wird über ein Sieb mit der Maschenweite von 0,4 mm abgetrennt. Die so hergestellten Granulate sind abriebfest und gut verträglich mit dem gängigen wäßrigen Offset-Überdrucklack 350081 der Weilburger Lackfabrik.

### Beispiel 4

67 g SMA^{®}-1440 F der Fa. Elf-Atochem werden in 590 g VE-Wasser und 29 g 2-Amino-2-Methyl-1-Propanol (75%ig in Wasser) gelöst. Nach der Auflösung des Harz-anteils erfolgt die Zudosierung von 16 g Polyethylenglykol 2000 und die anschließende Homogenisierung bis eine klare Lösung entsteht.

Anschließend erfolgt der Eintrag in 1000 g Iriodin^{®} 103 (Perlglanzpigment der Fa. Merck KGaA). In die resultierende Anteigung werden 17 g wäßrige Pigmentpräparation Hydrocolor Gelb, Cl PY 83, der Fa. MK Chemicals eingearbeitet. Die Trocknung erfolgt bei 60-120 °C über 48 Stunden im Trockenschrank. Es resultiert eine gelbstichige Perlglanzpigmentpräparation mit interessanten koloristischen Eigenschaften. Die so hergestellte Präparation wird auf einem Granulierteller TR 01 der Fa. Eirich, granuliert. Grobkornabtrennung erfolgt über Sieb mit der obersten Maschenweite von 2 mm. Der Feinanteil wird über ein Sieb mit der Maschenweite von 0,4 mm abgetrennt. Die so hergestellten Granulate sind abriebfest und gut verträglich mit dem gängigen wäßrigen Offset-Überdrucklack 350081 der Weilburger Lackfabrik.

### Beispiel 5

67 g SMA^{®}-1440 F der Fa. Elf-Atochem werden in 590 g VE-Wasser und 29 g 2-Amino-2-Methyl-1-Propanol (75%ig in Wasser) gelöst. Nach der Auflösung des Harz-anteils erfolgt die Zudosierung von 16 g Polyethylenglykol 2000 und die anschließende Homogenisierung bis eine klare Lösung entsteht.

Anschließend erfolgt der Eintrag in 1000 g Iriodin^{®} 103. In die resultierende Anteigung werden 17 g wäßrige Pigmentpräparation Hydrocolor Rot, Cl PR 146, der Fa. MK Chemicals eingearbeitet. Die Trocknung erfolgt bei 60-120 °C über 48 h im Trockenschrank. Es resultiert eine rotstichige Perlglanzpigmentpräparation mit interessanten koloristischen Eigenschaften. Die so hergestellte Präparation wird auf einem Granulierteller TR 01 der Fa. Eirich, granuliert. Die Grobkornabtrennung erfolgt über ein Sieb mit der obersten Maschenweite von 2 mm. Der Feinanteil wird über ein Sieb mit der Maschenweite von 0,4 mm abgetrennt. Die so hergestellten Granulate sind abriebfest und gut verträglich mit dem gängigen wäßrigen Offset-Überdrucklack 350081 der Weilburger Lackfabrik.

### Beispiel 6

67 g SMA^{®}-1440 F der Fa. Elf-Atochem werden in 590 g VE-Wasser und 29 g 2-Amino-2-Methyl-1-Propanol; 75%ig in Wasser gelöst. Nach der Auflösung des Harzanteils erfolgt die Zudosierung von 16 g Polyethylenglykol 2000 und die anschließende Homogenisierung bis eine klare Lösung entsteht.

Anschließend erfolgt sorgfältiger Eintrag in 1000 g Iriodin^{®} 103. In die resultierende Anteigung werden 17 g lösemittelhaltige Pigmentpräparation Solcolor Blau, Cl PB 15:3, der Fa. MK Chemicals eingearbeitet. Die so hergestellte Präparation wird auf einem Granulierteller TR 01 der Fa. Eirich, granuliert. Die Trocknung erfolgt bei 60-120 °C über 48 Stunden im Trockenschrank. Es resultiert ein blaustichiges Perlglanzgranulat mit interessanten koloristischen Eigenschaften. Grobkornabtrennung erfolgt über Sieb mit der obersten Maschenweite von 2 mm. Der Feinanteil wird über ein Sieb mit der Maschenweite von 0,4 mm abgetrennt. Die so hergestellten Granulate sind abriebfest und gut verträglich mit dem gängigen wäßrigen Offset-Überdrucklack 350081 der Weilburger Lackfabrik.

### Beispiel 7

67 g SMA^{®}-1440 F der Fa. Elf-Atochem werden in 590 g VE-Wasser und 29 g 2-Amino-2-Methyl-1-Propanol (75%ig in Wasser) gelöst. Nach der Auflösung des Harz-anteils erfolgt die Zudosierung von 16 g Polyethylenglykol 2000 und die anschließende Homogenisierung bis eine klare Lösung entsteht.

Im nächsten Schritt erfolgt sorgfältiger Eintrag in 1000 g Iriodin^{®}. In die resultierende Anteigung werden 17 g lösemittelhaltige Pigmentpräparation Solcolor Grün der Fa. MK Chemicals eingearbeitet. Die so hergestellte Präparation wird auf einem Granulierteller TR 01 der Fa. Eirich granuliert. Die Trocknung erfolgt bei 60-120 °C über 48 h im Trockenschrank. Es resultiert ein grünstichiges Perlglanzgranulat mit interessanten koloristischen Eigenschaften. Grobkornabtrennung erfolgt über ein Sieb mit der obersten Maschenweite von 2 mm. Der Feinanteil wird über ein Sieb mit der Maschenweite von 0,4 mm abgetrennt. Die so hergestellten Granulate sind abriebfest und gut verträglich mit dem gängigen wäßrigen Offset-Überdrucklack 350081 der Weilburger Lackfabrik.

## Patentansprüche

1. Trockenpräparate, **dadurch gekennzeichnet, dass** sie
| | |
|---|---|
| > 70 Gew.% | eines oder mehrerer Perlglanzpigmente und/oder ein oder mehrerer mit ein oder mehreren Metalloxiden beschichtete Glas- oder TiO₂-Plättchen, |
| ≥ 0,5 Gew.% | eines styrolmodifizierten Maleinatharzes mit einer Säurezahl von > 90 mg KOH/g, |
| ≤ 5 Gew.% | Restfeuchte in Form von Wasser und/oder eines organischen Lösemittels oder Lösemittelgemisches, |
| 0 - 10 Gew.% | Neutralisationsmittel und |
| 0 - 10 Gew.% | Modifiziermittels |
enthalten.

2. Trockenpräparate nach Anspruch 1, **dadurch gekennzeichnet, dass** das Perlglanzpigment ein TiO₂/Glimmer- oder Fe₂O₃-Glimmerpigment ist.

3. Trockenpräparate nach Anspruch 1 oder 2, **dadurch gekennzeichnet, dass** das SiO₂-Plättchen mit TiO₂ und/oder Fe₂O₃ beschichtet ist.

4. Trockenpräparate nach einem oder mehreren der Ansprüche 1 bis 3, **dadurch gekennzeichnet, dass** das Maleinatharz α-Methylstyrolmodifiziert ist.

5. Trockenpräparate nach einem oder mehreren der Ansprüche 1 bis 4, **dadurch gekennzeichnet, dass** das Maleinatharz ein Styrol-Maleinsäureanhydrid-Verhältnis von 1 : 1 bis 4 : 1 aufweist.

6. Trockenpräparate nach einem oder mehreren der Ansprüche 1 bis 5, **dadurch gekennzeichnet, dass** das Maleinatharz ein mittleres Molekulargewicht von 500 bis 200000 hat.

7. Trockenpräparate nach einem oder mehreren der Ansprüche 1 bis 6, **dadurch gekennzeichnet, dass** das Maleinatharz ein mittleres Molekulargewicht von 1000 bis 100000 hat.

8. Trockenpräparate nach einem oder mehreren der Ansprüche 1 bis 7, **dadurch gekennzeichnet, dass** das Maleinatharz ein mittleres Molekulargewicht von 1000 bis 50000 hat.

9. Trockenpräparate nach einem oder mehreren der Ansprüche 1 bis 8, **dadurch gekennzeichnet, dass** die Trockenpräparate als zusätzliche Komponenten organische und/oder anorganische Pigmente, Entschäumer, oberflächenaktive Substanzen, Netzmittel, Antiabsetzmittel, Verlaufsmittel, Sikkative und/oder Thixotropiermittel enthalten.

10. Trockenpräparate nach einem oder mehreren der Ansprüche 1 bis 9, **dadurch gekennzeichnet, dass** das Neutralisationsmittel ausgewählt ist aus der Gruppe Harnstoff, Harnstoffderivate, Ammoniak, Aminoalkohole, Alkalihydroxide, Amine.

11. Trockenpräparate nach einem oder mehreren der Ansprüche 1 bis 10, **dadurch gekennzeichnet, dass** sie als Chips, Pellets, Briketts oder Granulate vorliegen.

12. Trockenpräparate nach einem oder mehreren der Ansprüche 1 bis 11, **dadurch gekennzeichnet, dass** die Granulate in Kugelform vorliegen.

13. Trockenpräparate nach einem oder mehreren der Ansprüche 1 bis 12, **dadurch gekennzeichnet, dass** sie Teilchchengrößen im Bereich von 0,1 bis 150 mm aufweisen.

14. Verwendung der Trockenpräparate nach einem oder mehreren der Ansprüche 1 bis 13 in Farben, Lacken, Druckfarben, Kunststoffen, Automobillacken und Pulverlacken.
